# EUROPEAN PATENT APPLICATION

(11) **EP 3 792 519 A1**
(43) Date of publication of application: **17.03.2021**
(21) Application number: 20193559.0
(22) Date of filing: 31.08.2020
(51) Int. Cl.: F16D 65/00

(54) **PISTON RESETTING TOOL FOR DISK BRAKE**

(30) Priority: 10.09.2019 CN 201910854397
(71) Applicant: Nuevo Products Development Co., Ltd., Changhua City, Changhua County (TW); YO LEE AUTO CO., LTD., Tainan City (TW)
(72) Inventor: TSENG, Chao-Ching, Changhua City Changhua County (TW); WANG, Kun-Wang, Tainan City (TW)
(74) Representative: Cabinet Chaillot

(57) **Abstract**

A piston resetting tool for disk brake, including a main body (10), a first pressing plate (20), a second pressing plate (30)and an operating rod (40), wherein, the side of the main body is connected to the first pressing plate, the second pressing plate (30) is adjacent to the other side of the main body, and the operating rod (40) is configured on one end of the main body;
the inside of the main body is pivotally configured with a rotating piece (11); the rotating piece is configured with a middle tube through a first screw barrel (12) in threaded joint; a middle tube (60) is configured with a screw rod (70) through a second screw barrel (62) in threaded joint; the screw rod (70) is connected to the second pressing plate (30), so that the second pressing plate can move to and fro.

## Description

### BACKGROUND OF INVENTION

### 1. Field of the Invention

The present invention relates generally to a special car repair tool, and more particularly to an innovative structural design of a piston resetting tool for disk brake.

### 2. Description of Related Art

A disk brake assembly comprises a brake disc and a brake caliper, wherein, the piston of the brake caliper pushes the brake pad to move toward the brake disc, so as to reduce the rotational speed of the brake disc. To replace the brake pad, the piston must be pressed to be reset inside the brake caliper.

To match different types of brake discs, the space width of the calipers to allow movement of the brake discs may be different. The conventional tool to push the piston back into the caliper cannot be universally applied to reset the piston inside calipers of different sizes.

Thus, to overcome the aforementioned problems of the prior art, it would be an advancement in the art to provide an improved structure that can significantly improve the efficacy.

Therefore, the inventor has provided the present invention of practicability after deliberate design and evaluation based on years of experience in the production, development and design of related products.

### SUMMARY OF THE INVENTION

The main object of the present invention is to provide a piston resetting tool for disk brake. As a technical breakthrough, it aims to find a solution to develop a universal tool to reset pistons for calipers of various sizes.

Based on the above-mentioned object, the present invention provides a solution mainly through the following technical features: said piston resetting tool for disk brake includes a main body, a first pressing plate, a second pressing plate and an operating rod, wherein, one side of the main body is connected to the first pressing plate, the second pressing plate is adjacent to the other side of the main body, and the operating rod is configured on one end of the main body;

The inside of the main body is pivotally configured with a tube-shaped rotating piece. The operating rod and the rotating piece are linked through a transmitting structure and will move together. The end of the rotating piece adjacent to the second pressing plate is configured with a first screw barrel in the axial direction. The end of the first screw barrel away from the second pressing plate is formed with a ring-shaped first limiting portion inside the rotating piece;

The rotating piece is connected on the periphery of a middle tube through the first screw barrel, so that the rotating piece can drive the middle tube to move to and fro in directions toward or away from the first pressing plate. The middle tube is configured with a ring-shaped first convex portion in the axial direction. The first limiting portion limits the first convex portion;

The end of the middle tube adjacent to the second pressing plate is configured with a second screw barrel in the axial direction. The middle tube is connected on the periphery of a screw rod through the second screw barrel, so that the middle tube can drive the screw rod to move to and fro in directions toward or away from the first pressing plate. The end of the second screw barrel away from the second pressing plate is formed with a ring-shaped second limiting portion inside the middle tube. One end of the screw rod is connected to the second pressing plate. The other end of the screw rod is configured with a second convex portion in the axial direction. The second limiting portion limits the second convex portion.

The main efficacies and advantages of the present invention is that, it can move the second pressing plate farther away from the main body without the need to increase thickness of the main body, and thus it can be applied to reset pistons for disk brake in calipers of different sizes.

### BRIEF DESCRIPTION OF THE DRAWINGS

Fig. 1 is a perspective view of Embodiment 1 of the present invention.
Fig. 2 is an exploded perspective view of Embodiment 1 of the present invention.
Fig. 3 is a sectional view of the main body in Embodiment 1 of the present invention.
Fig. 4 is a sectional view of the main body in Embodiment 1 of the present invention in operational state.
Fig. 5 is a sectional view of the main body in Embodiment 2 of the present invention.
Fig. 6 is a sectional view of the main body in Embodiment 3 of the present invention.
Fig. 7 is a sectional view of the main body in Embodiment 4 of the present invention.
Fig. 8 is a sectional view of the main body in Embodiment 4 of the present invention in operational state.

### DETAILED DESCRIPTION OF THE INVENTION

Disclosed in the figures are a plurality of feasible embodiments of the present invention of a piston resetting tool for disk brake, with Embodiment 1 as preferred embodiment. However, such embodiments are illustrative only and are not intending to limit the scope of the invention.

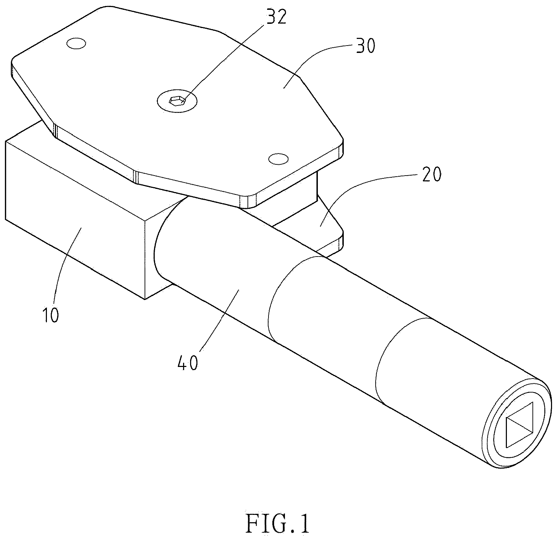

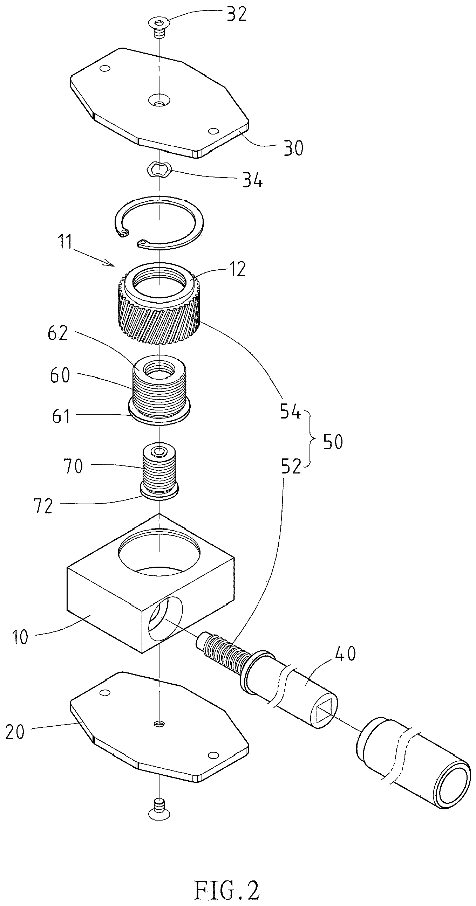

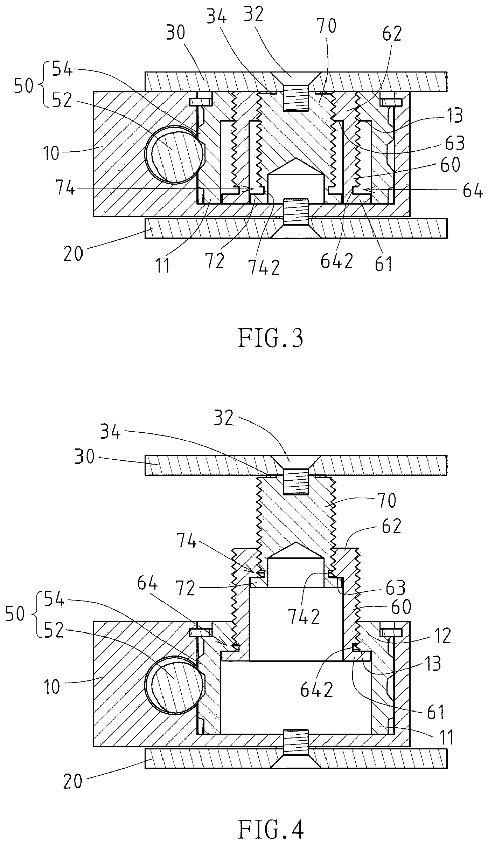

Referring to Figs. 1 to 4, Embodiment 1 of the present invention of a piston resetting tool for disk brake includes a main body 10, a first pressing plate 20, a second pressing plate 30 and an operating rod 40, wherein, one side of the main body 10 is connected to the first pressing plate 20, the second pressing plate 30 is adjacent to the other side of the main body 10, and the operating rod 40 is configured on one end of the main body 10. The inside of the main body 10 is pivotally configured with a tube-shaped rotating piece 11. The operating rod 40 is linked to the rotating piece 11 through a transmitting structure 50 and can move together. The transmitting structure 50 is mainly made up of a worm shaft 52 and a worm gear 54 meshing each other. The worm shaft 52 is configured on one end of the operating rod 40, whereas the worm gear 54 is configured on the rotating piece 11.

The end of the rotating piece 11 adjacent to the second pressing plate 30 is configured with a first screw barrel 12 in the axial direction. The end of the first screw barrel 12 away from the second pressing plate 30 is formed with a ring-shaped first limiting portion 13 inside the rotating piece 11. The rotating piece 11 is connected on the periphery of a middle tube 60 through the first screw barrel 12, so that the rotating piece 11 can drive the middle tube 60 to move to and fro in directions toward or away from the first pressing plate 20. The end of the middle tube 60 away from the second pressing plate 30 is integrally formed with a ring-shaped first convex portion 61 in the axial direction. The first limiting portion 13 limits the first convex portion 61. The end of the middle tube 60 adjacent to the second pressing plate 30 is configured with a second screw barrel in the axial direction 62. The middle tube 60 is connected on the periphery of a screw rod 70 through the second screw barrel 62 in threaded joint, so that the middle tube 60 can drive the screw rod 70 to move to and fro in directions toward or away from the first pressing plate 20. The end of the second screw barrel 62 away from the second pressing plate 30 is formed with a ring-shaped second limiting portion 63 inside the middle tube 60.

One end of the screw rod 70 is connected to the second pressing plate 30, whereas the other end of the screw rod 70 is configured with a second convex portion in the axial direction 72. The second limiting portion 63 limits the second convex portion 72.

The middle tube 60 is configured with a first anti-locking mechanism 64. With this configuration, when the middle tube 60 moves away from the first pressing plate 20 to the dead point of the stroke, the middle tube 60 and the rotating piece 11 will not be locked with each other. The screw rod 70 is configured with a second anti-locking mechanism 74. With this configuration, when the screw rod 70 moves away from the first pressing plate 20 to the dead point of the stroke, the screw rod 70 and the middle tube 60 will not be locked with each other. In particular, between the middle tube 60 and the first convex portion 61, there is a radial reduction to form a first neck portion 642, thus constituting the first anti-locking mechanism 64. Between the screw rod 70 and the second convex portion 72, there is a radial reduction to form a second neck portion 742, thus constituting the second anti-locking mechanism 74.

By rotating the operating rod 40, the transmitting structure 50 will drive the rotating piece 11 to rotate, the first screw barrel 12 will drive the middle tube 60 to move to and fro in directions toward or away from the first pressing plate 20, and the second screw barrel 62 will drive the screw rod 70 to move to and fro in directions toward or away from the first pressing plate 20, so that the second pressing plate 30 will move toward or away from the first pressing plate 20, pressing the piston of the disk brake assembly and force it back into the caliper.

When the middle tube 60 moves away from the first pressing plate 20, the first limiting portion 13 limits the first convex portion 61. As the middle tube 60 and the first screw barrel 12 are linked together through threaded joint, when the middle tube 60 moves to the dead point of the stroke, the first limiting portion 13 will contact the first convex portion 61, and the first anti-locking mechanism 64 can prevent the middle tube 60 and the first screw barrel 12 from locking with each other, which may cause difficulty for the first screw barrel 12 to rotate inversely, and for the middle tube 60 to move toward the first pressing plate 20.

When the screw rod 70 moves away from the first pressing plate 20 to the dead point of the stroke, just like the first anti-locking mechanism 64, the second anti-locking mechanism 74 will prevent the screw rod 70 and the second screw barrel 62 from locking with each other, which may cause difficulty for the second screw barrel 62 to rotate inversely, and for the screw rod 70 to move toward the first pressing plate 20.

The second pressing plate 30 and the screw rod 70 are locked with each other through a screw bolt 32, and the screw bolt 32 is sleeved with a wave spring 34 between the second pressing plate 30 and the screw rod 70. The wave spring 34 can provide a stable friction upon the second pressing plate 30 and the screw rod 70, and can prevent the screw rod 70 from rotating with the second screw barrel 62.

Based on the above-mentioned structural constitution and technical features, during the operation of resetting the piston for disk brake, the middle tube 60 and the screw rod 70 can respectively move away from the first pressing plate 20. Without the need to increase thickness of the main body 10, the second pressing plate 30 can be pushed farther away from the main body 10. The present invention can be applied for piston resetting operations for calipers of different sizes.

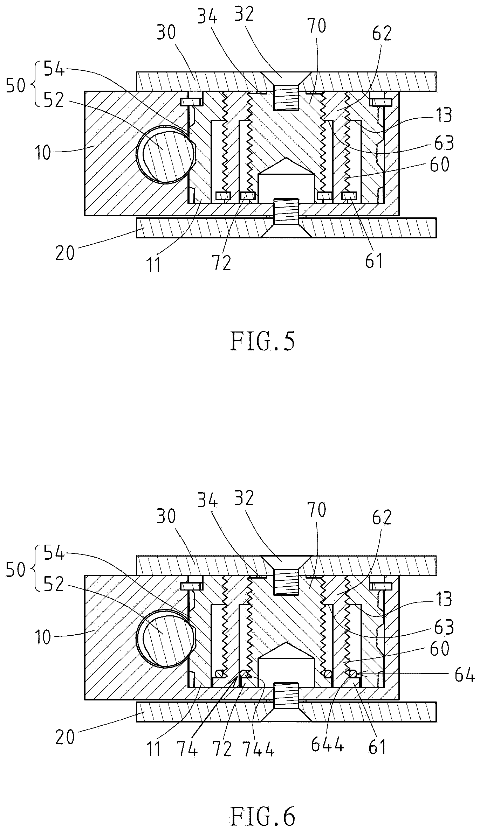

Referring to Fig. 5, the structure of Embodiment 2 differs from Embodiment 1 mainly in that: the first convex portion 61 and the second convex portion 72 are respectively snap rings, and Embodiment 2 does not have the first anti-locking mechanism 64 and the second anti-locking mechanism 74 as in Embodiment 1.

Referring to Fig. 6, the structure of Embodiment 3 differs from Embodiment 1 mainly in that: the middle tube 60 is axially sleeved with a first annular ring 644, and the first annular ring 644 is adjacent to the first convex portion 61, thus constituting the first anti-locking mechanism 64, and similarly, the screw rod 70 is axially sleeved with a second annular ring 744, and the second annular ring 744 is adjacent to the second convex portion 72, thus constituting the second anti-locking mechanism 74. The first annular ring 644 and the second annular ring 744 are respectively made of an elastic material. Preferably, the thickness of the first annular ring 644 is at least larger than the pitch of threads of the first screw barrel 12, and the thickness of the second annular ring 744 is at least larger than the pitch of the threads of the second screw barrel 62.

When the first convex portion 61 approaches the first limiting portion 13, the first limiting portion 13 will press the first annular ring 644. The elastic force of the first annular ring 644 will be transmitted to the user's hand through the operating rod 40. When the second convex portion 72 approaches the second limiting portion 63, the second limiting portion 63 will press the second annular ring 744. Similarly, the elastic force of the second annular ring 744 will be transmitted to the user's hand through the operating rod 40. Through the different feelings of the hand, the user will be aware of possible pressure between the first convex portion 61 and the first limiting portion 13, or between the second convex portion 72 and the second limiting portion 63, and can take measures in response.

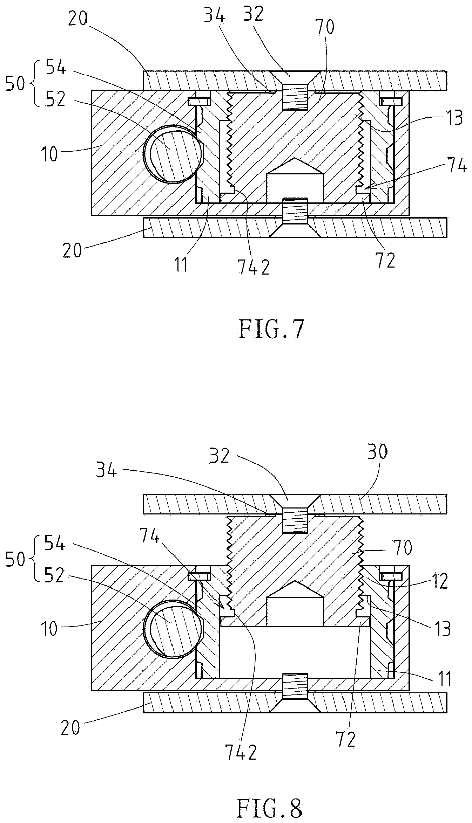

Embodiment 4 is a variation based on Embodiment 1. Referring to Figures 7, 8, the constitution of Embodiment 4 differs from Embodiment 1 in that: Embodiment 4 does not have the middle tube 60 as in Embodiment 1, and in Embodiment 4, the first screw barrel 12 are linked with the screw rod 70 through threaded joint, and the first limiting portion 13 limits the second convex portion 72.

## Claims

1. A piston resetting tool for disk brake, including a main body (10), a first pressing plate (20), a second pressing plate (30) and an operating rod (40), wherein, one side of the main body (10) is connected to the first pressing plate (20), the second pressing plate (30) is adjacent to the other side of the main body (10), and the operating rod (40) is configured on one end of the main body (10); the inside of the main body (10) is pivotally configured with a tube-shaped rotating piece (11), the operating rod (40) and the rotating piece (11) are linked through a transmitting structure (50) and can move together, the end of the rotating piece (11) adjacent to the second pressing plate (30) is configured with a first screw barrel (12) in the axial direction, and the end of the first screw barrel (12) away from the second pressing plate (30) is formed with a ring-shaped first limiting portion (13) inside the rotating piece (11);
the rotating piece (11) is connected on the periphery of a middle tube (60) through the first screw barrel (12), so that the rotating piece (11) can drive the middle tube (60) to move to and fro in directions toward or away from the first pressing plate (20); the middle tube (60) is configured with a ring-shaped first convex portion (61) in the axial direction; the first limiting portion (13) limits the first convex portion (61);
the end of the middle tube (60) adjacent to the second pressing plate (30) is configured with a second screw barrel (62) in the axial direction; the middle tube (60) is connected on the periphery of a screw rod (70) through the second screw barrel (62), so that the middle tube (60) can drive the screw rod (70) to move to and fro in directions toward or away from the first pressing plate (20); the end of the second screw barrel (62) away from the second pressing plate (30) is formed with a ring-shaped second limiting portion (63) inside the middle tube (60); one end of the screw rod (70) is connected to the second pressing plate (30); the other end of the screw rod (70) is configured with a second convex portion (72) in the axial direction; the second limiting portion (63) limits the second convex portion (72).

2. The piston resetting tool for disk brake defined in Claim 1, wherein, the transmitting structure (50) is mainly made of a worm shaft (52) and a worm gear (54) meshing each other, with the worm shaft (52) configured on one end of the operating rod (40), whereas the worm gear (54) configured on the rotating piece (11).

3. The piston resetting tool for disk brake defined in Claim 1 or 2, wherein, between the middle tube (60) and the first convex portion (61), there is a radial reduction to form a first neck portion (642), thus constituting a first anti-locking mechanism (64), similarly, between the screw rod (70) and the second convex portion (72), there is a radial reduction to form a second neck portion (742), thus constituting a second anti-locking mechanism (74).

4. The piston resetting tool for disk brake defined in Claim 1 or 2, wherein, the middle tube (60) is sleeved with a first annular ring (644), the first annular ring (644) is adjacent to the first convex portion (61), thus constituting a first anti-locking mechanism (64), and similarly, the screw rod (70) is sleeved with a second annular ring (744), the second annular ring (744) is adjacent to the second convex portion (72), thus constituting a second anti-locking mechanism (74); the first annular ring (644) and the second annular ring (744) are respectively made of an elastic material.

5. The piston resetting tool for disk brake defined in Claim 1 or 2, wherein, the end of the middle tube (60) away from the second pressing plate (30) is integrally configured with the first convex portion (61).

6. The piston resetting tool for disk brake defined in Claim 1 or 2, wherein, the first convex portion (61) and the second convex portion (72) are respectively a snap ring.

7. A piston resetting tool for disk brake, including a main body (10), a first pressing plate (20), a second pressing plate (30) and an operating rod (40), wherein, one side of the main body (10) is connected to the first pressing plate (20), the second pressing plate (30) is adjacent to one side of the main body (10), the operating rod (40) is configured on one end of the main body (10);
the inside of the main body (10) is pivotally configured with a tube-shaped rotating piece (11), the operating rod (40) and the rotating piece (11) are linked through a transmitting structure (50) and can move together, the end of the rotating piece (11) adjacent to the second pressing plate (30) is configured with a first screw barrel (12) in the axial direction, the end of the first screw barrel (12) away from the second pressing plate (30) is formed with a ring-shaped first limiting portion (13) inside the rotating piece (11), the rotating piece (11) is connected to the periphery of a screw rod (70) through the first screw barrel (12) in threaded joint, so that the rotating piece (11) can drive the screw rod (70) to move to and fro in directions toward or away from the first pressing plate (20), one end of the screw rod (70) is connected to the second pressing plate (30), whereas the other end of the screw rod (70) is configured with a second convex portion (72) in the axial direction, and the first limiting portion (13) limits the second convex portion (72).

8. The piston resetting tool for disk brake defined in Claim 7, wherein, the transmitting structure (50) is mainly made up of a worm shaft (52) and a worm gear (54) meshing each other, the worm shaft (52) is configured on one end of the operating rod (40), whereas the worm gear (54) is connected to the rotating piece (11) in the axial direction.

9. The piston resetting tool for disk brake defined in Claim 7 or 8, wherein, between the screw rod (70) and the second convex portion (72), there is a radial reduction to form a second neck portion (742), thus constituting a second anti-locking mechanism (74).

10. The piston resetting tool for disk brake defined in Claim 7 or 8, wherein, the screw rod (70) is sleeved with a second annular ring (744), the second annular ring (744) is adjacent to the second convex portion (72), thus constituting a second anti-locking mechanism (74); the second annular ring (744) is made of an elastic material.
